# EUROPEAN PATENT APPLICATION

(11) **EP 2 465 604 A1**
(43) Date of publication of application: **20.06.2012**
(21) Application number: 10195774.4
(22) Date of filing: 17.12.2010
(51) Int. Cl.: B01J 19/18, B01J 19/20

(54) **Batch reactor and method for carrying out a polymerization reaction**

(71) Applicant: Stamicarbon B.V. acting under the name of MT Innovation Center, 6135 KW Sittard (NL)
(72) Inventor: Facchi, Edoardo, 24040 Torre Boldone (BG) (IT)
(74) Representative: Jansen, Cornelis Marinus

(57) **Abstract**

Batch reactor comprising a reaction vessel that is longitudinally shaped and has a side wall that encloses a reaction space of the reaction vessel. The reaction vessel is arranged for holding in the reaction space a reaction mixture that comprises polyamide and/or a liquid monomer composition. The reaction further has a bottom wall that further encloses the reaction space. The side wall extends in a longitudinal direction of the reaction vessel that is, in use, directed upwards. The batch reactor has an outer heat exchanger for exchanging heat with the reaction space for enabling a polymerization reaction. The outer heat exchanger covers at least a part of the side wall. The batch reactor comprises an inner heat exchanger that is provided in the reaction space. The inner heat exchanger is, at least partly, surrounded by the outer heat exchanger. The batch reactor comprises an agitator for transporting the reaction mixture.

## Description

### Field of the invention

The invention relates to a batch reactor for carrying out a polymerization reaction for forming a polymer, in particular polyamide, from a liquid monomer composition. The invention also relates to a method of carrying out a polymerization reaction for forming a polymer, in particular polyamide, from a liquid monomer composition by means of a batch reactor.

### Background

A polymer such as polyamide, e.g. polyamide 66, can be produced from a reaction in a continuous process. Alternatively however, it can be produced in a batch process. An advantage of such a batch process is that it offers flexibility of the process. A relatively wide range of different products can be made by changing process conditions among batches, so that different batches have different process conditions. If such different process conditions would be applied in a continuous process, there will always be transition material produced under changing process conditions. Such transition material can be sold or recycled or disposed.

One way of producing polyamide 66 in a batch process is by using salt of adipic acid and hexamethylene diamine, in short AH salt, as a starting product. Such salt may be provided e.g. in the form of an aqueous solution. Polyamide 66 may then be produced by removing water from the aqueous solution. In a typical embodiment the AH salt solution is first concentrated before transferring it to a batch reactor for carrying out a polymerization reaction for forming polyamide 66 from the solution. In the batch reactor the main polymerization reaction takes place building molecular weight until the desired molecular weight is achieved.

Several types of batch reactors are known in the art. During the polymerization of concentrated AH salt solutions large amounts of water need to be removed in a short time in order to grow molecular weight. At the same time, it is important that a produced batch of polymer is relatively homogeneous. When producing batches of polymer on an industrial scale with known batch reactors, achieving such homogeneity requires improvement of the batch reactor, in particular when producing polyamide 66.

### Summary

Accordingly, it is an object of the invention to provide an improved batch reactor, which enables production of polymer, preferably polyamide, with a relatively high homogeneity.

Thereto the invention provides a batch reactor for carrying out a polymerization reaction for forming a polymer, in particular polyamide, for example polyamide 66, from a liquid monomer composition, the batch reactor comprising: - a reaction vessel that is longitudinally shaped and has a side wall that encloses a reaction space of the reaction vessel, the reaction vessel being arranged for holding in the reaction space a reaction mixture that comprises the polymer and/or the liquid monomer composition, the reaction vessel further having a bottom wall that further encloses the reaction space and is connected to the side wall, wherein the side wall extends away from the bottom wall in a longitudinal direction of the reaction vessel that is, in use, directed upwards, preferably vertically upwards; - an outer heat exchanger for exchanging heat with the reaction space for enabling the polymerization reaction, the outer heat exchanger covering at least a part of the side wall, said part preferably extending from the bottom wall in the longitudinal direction; - an inner heat exchanger that is provided in the reaction space and that extends in the longitudinal direction, wherein the inner heat exchanger is, at least partly and preferably completely, surrounded by the outer heat exchanger; - an agitator for transporting the reaction mixture through the reaction space, wherein at least part of the agitator is surrounded by the internal heat exchanger, wherein the agitator is arranged for transporting the reaction mixture through the inner heat exchanger against the longitudinal direction and along the outer heat exchanger in the longitudinal direction, and/or vice versa, for exchanging heat between the reaction mixture and the inner- and outer heat exchanger.

By means of the combination of the inner heat exchanger and the outer heat exchanger, heating of the reaction mixture in the reaction space with increased homogeneity is enabled. Such is the result of an increased heat exchange surface provided by both the inner heat exchanger and the outer heat exchanger. Thus, a homogeneity of the polymer may be increased by more homogeneous heat exchange. By having at least part of the agitator surrounded by the internal heat exchanger, a dominant transportation direction of the reaction mixture can be imposed in a part of the reaction space that is surrounded by the internal heat exchanger. In a part of the reaction space between the internal heat exchanger and the outer heat exchanger, the reaction mixture may predominantly flow in a direction opposite to said dominant transportation direction. Thus, a circulating motion of the reaction mixture along both the inner heat exchanger and the outer heat exchanger can be realised. Such may enable efficient mixing of the reaction mixture. This may further increase the homogeneity of the polymer.

Realising an increased homogeneity becomes even more important when a scale of the reaction vessel is increased. Thus, for economical batch polymerization of polymers such as polyamide, in particular polyamide 66, it is desirable to have a high heat exchange as well as efficient mixing in order to have a homogeneous polymer.

In an embodiment, the reaction vessel is substantially cylindrically shaped and has an axis of symmetry that is directed in the longitudinal direction. Preferably, the inner heat exchanger is shaped as an annular ring having an axis of symmetry that is directed in the longitudinal direction. The inner heat exchanger may thus, in this embodiment, enclose a substantially cylindrically-shaped part of the reaction space. Preferably, a diameter of the cylindrically-shaped part of the reaction space enclosed by the inner heat exchanger divided by a radial distance between the side wall and the inner heat exchanger is in a range from 1.2 to 1.8, for example approximately 1.5. Preferably, the agitator comprises an Archimedes screw. Optionally, the Archimedes screw is at least partly surrounded by the internal heat exchanger. Preferably, a width of the Archimedes screw is at least 90%, preferably at least 95%, more preferably at least 97%, of a diameter of the substantially cylindrically-shaped part of the reaction space enclosed by the inner heat exchanger. Preferably, the outer heat exchanger further substantially covers, at least part of, the bottom wall. Preferably, the agitator is provided with means, which preferably comprise a ribbon, for wiping an inner surface of the side wall. Such embodiments may further increase the homogeneity of the reaction mixture and consequently the produced polymer.

In an embodiment, the bottom wall comprises a reaction mixture outlet for discharging the reaction mixture, e.g. comprising the polyamide, out of the reaction space. Preferably, the bottom wall is, at least partly and preferably completely, sloped with respect to the longitudinal direction. In known batch reactors, a problem may occur in that substantial amounts of rest material may consistently remain in the reactor after discharging the batch of formed polymer. Such rest material may be a potential source of contamination for a next batch. This contamination may degrade the quality of the next batch and possibly the quality of subsequent batches. Since the rest material may remain in the batch reactor for a time longer than a standard cycle time (i.e. a time between the start of subsequent batches) and may eventually be released randomly, the rest material may be discoloured or may have turned black. Thus, the rest material may give rise to discoloured parts or even black specks in a batch of discharged polymer. Quality parameters of the discharged batch of polymer, like a yellow index parameter or a gels concentration, may be deteriorated. In this embodiment, the slope of the bottom wall may facilitate discharge of the polymer. Hence, the amount of rest material may be reduced. Thus, deterioration of quality parameters may, at least partly, be prevented. Preferably, the bottom wall has a frustoconical shape. Preferably, an angle of the slope of the bottom wall with respect to the longitudinal direction is in a range from 35 to 48 degrees, preferably in a range from 38 to 46 degrees, more preferably in a range from 39 to 44 degrees, for example approximately 41 degrees. The sloped orientation of the bottom wall may hinder the agitator to reach the reaction mixture outlet. For said angles of the slope of the bottom wall, a satisfactory compromise may be realised between, on the one hand, a distance between the agitator and the reaction mixture outlet, and, on the other hand, a speed of discharge of the polymer after the polymerisation reaction has ended.

In an embodiment, the inner heat exchanger comprises a plurality of heat exchange tubes that extend in the longitudinal direction. In this way, a relatively large heat exchange surface can be realised. This may increase the homogeneity of the polymer. Preferably, outer diameters, the number, and mutual distances of the heat exchange tubes are arranged for enabling a majority of the polymer that is present in between the heat exchange tubes at the end of the polymerization reaction to flow, as a result of gravity and/or pressure in the reaction vessel, downwards in between the heat exchange tubes and away from the heat exchange tubes towards the reaction mixture outlet, during a discharge time in between batches, optionally being at most 60 or at most 40 minutes, preferably at most 35 minutes, more preferably at most 30 minutes, for example approximately 25 minutes. Preferably, at an end of the heat exchange tubes, which end is directed towards the bottom wall, a collecting tube that is in fluid communication with the heat exchange tubes and has, at a side directed away from the bottom wall, an outer surface, said outer surface being sloped with respect to a direction that is perpendicular to the longitudinal direction.

In an embodiment, the inner heat exchanger has, in the longitudinal direction, a top end, wherein the outer heat exchanger has, in the longitudinal direction, a top end, wherein, in use at the start of polymerization, the level of the reaction mixture is below the top end of the outer heat exchanger and/or wherein, in use at the end of polymerization, the level of the reaction mixture is above the top end of the inner heat exchanger so that the inner heat exchanger is substantially completely submerged in and/or substantially completely wetted by the reaction mixture, preferably during all of the polymerization reaction of a batch in the batch reactor. Preferably, the top end of the outer heat exchanger is at most 30 centimeter, preferably at most 20 centimeter, above the level of the reaction mixture. Preferably, the side wall extends, in the longitudinal direction away from the bottom wall, from the top end of the outer heat exchanger over a distance of at least approximately 0.75 meter, preferably at least 1 meter, more preferably at least 1.25 meter.

In an embodiment, the outer heat exchanger comprises an outer heat exchange medium and the inner heat exchanger comprises an inner heat exchange medium, wherein the batch reactor comprises a temperature sensor for measuring the temperature of the reaction mixture and further comprises a heater for heating the outer heat exchange medium and/or the inner heat exchange medium, wherein the batch reactor further comprises a controller that is arranged for controlling, based on the temperature of the reaction mixture measured by means of the temperature sensor, said heating by the heater.

It is another object of the invention to provide an improved method, which enables production of polymer, preferably polyamide, with a relatively high homogeneity.

Thereto the invention provides a method of carrying out a polymerization reaction for forming a polymer, in particular polyamide, for example polyamide 66, from a liquid monomer composition by means of a batch reactor, the method comprising: - providing a, preferably vertical, reaction vessel that is longitudinally shaped and has a side wall that encloses a reaction space of the reaction vessel, the reaction vessel further having a bottom wall that further limits the reaction space and is connected to the side wall, wherein the side wall extends from the bottom wall in a longitudinal direction of the reaction vessel that is, in use, directed upwards, preferably directed vertically upwards; - holding in the reaction space a reaction mixture that comprises the polymer and/or the liquid monomer composition; - exchanging heat with the reaction space by means of an outer heat exchanger that covers at least a part of the side wall that preferably extends from the bottom wall in the longitudinal direction, thus enabling the polymerization reaction; - exchanging heat with the reaction space by means of an inner heat exchanger that is provided in the reaction space and that extends in the longitudinal direction, the inner heat exchanger being, at least partly, surrounded by the outer heat exchanger; - transporting the reaction mixture through the reaction space through the inner heat exchanger against the longitudinal direction and along the outer heat exchanger in the longitudinal direction, and/or vice versa, by means of an agitator, wherein at least part of the agitator is surrounded by the internal heat exchanger, thus exchanging heat between the reaction mixture and the inner- and outer heat exchanger.

The method may be carried out by means of a batch reactor according to the invention.

### Brief description of the drawings

The invention will be described, by means of non-limiting examples, with reference to the accompanying drawings, in which:
Figure 1 schematically shows a batch reactor in a first embodiment according to the invention;
Figure 2A shows an exploded side view of batch reactor in a second embodiment according to the invention;
Figure 2B shows a lower part of the batch reactor in the second embodiment;
Figure 2C shows a lower part of the batch reactor in the second embodiment, without showing an agitator;
Figure 3 shows a cross-section of an inner heat exchanger indicated in figure 2C; and
Figure 4 schematically shows a cross-section of a batch reactor in a third embodiment according to the invention.

### Detailed description

Unless state otherwise, similar reference numbers refer to similar components throughout the drawings.

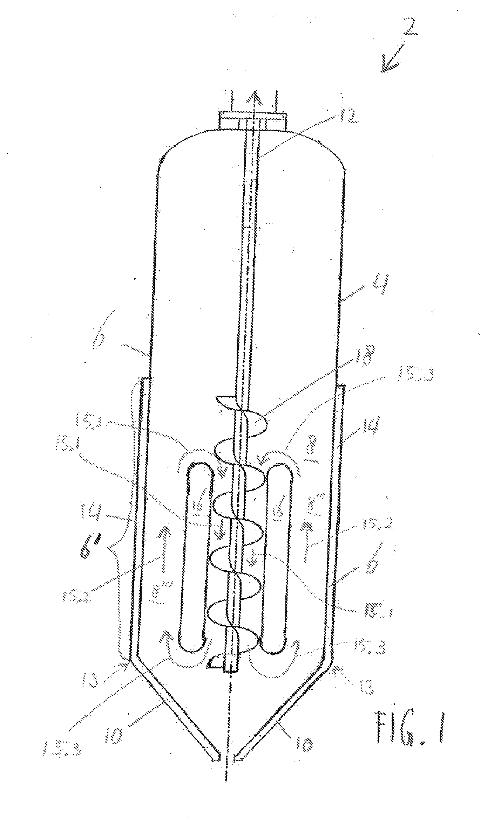

Figure 1 schematically shows a batch reactor 2 in a first embodiment according to the invention. The batch reactor 2 is arranged for carrying out a polymerization reaction for forming polyamide from a liquid monomer composition.

In general, the liquid monomer composition may comprise a pure monomer, a monomer mixture, a monomer salt or a solution thereof. The salt solution may e.g. be an aqueous salt solution. Said salt may e.g. be a salt of adipic acid and hexamethylene diamine (further being referred to as AH-salt). The polyamide may e.g. be polyamide 66. Thus, the batch reactor 2 may be arranged for carrying out a polymerization reaction for forming polyamide 66 from an aqueous solution of AH salt. The batch reactor 2 may be arranged for carrying out the polymerization reaction at an industrial scale. Hence, the batch reactor may be arranged for carrying out a polymerization reaction for forming, from the liquid monomer composition, a batch of polymer with a volume of at least 1 cubic meter, preferably at least 5 cubic meter.

The batch reactor comprises a reaction vessel 4. The reaction vessel 4 may be longitudinally shaped. Thus, in one direction, i.e. a longitudinal direction, the reaction vessel, in particular a space within the reaction vessel, may be longer than in a direction transverse, e.g. perpendicular, to the longitudinal direction. The reaction vessel 4 has a side wall 6. The side wall 6 encloses a reaction space 8 of the reaction vessel 4. The reaction vessel 4 is arranged for holding in the reaction space 8 a reaction mixture. The reaction mixture comprises the polyamide and/or the solution. The reaction vessel 4 further has a bottom wall 10 that further encloses the reaction space 8 and is connected to the side wall 6. The side wall and the bottom wall may be made out of one piece or may be attached, e.g. welded, to each other. The side wall 6 extends away from the bottom wall 10 in a longitudinal direction 12 of the reaction vessel 4. The side wall 6 may be substantially parallel with the longitudinal direction 12. Said longitudinal direction 12 is, in use, directed upwards. A boundary 13 between the side wall 6 and the bottom wall 10 may be defined at a position where, when following the side wall 6 against the longitudinal direction, the side wall starts to incline with respect to the longitudinal direction 12.

The batch reactor 2 further comprises an outer heat exchanger 14, e.g. a reactor jacket 14. The outer heat exchanger 14 is arranged for exchanging heat with the reaction space. In use, by means of the outer heat exchanger, heat may be exchanged with the reaction mixture in the reaction space. In that way, the polymerization reaction is enabled. E.g., heat supplied by the outer heat exchanger 14 towards the reaction mixture may enable the polymerization reaction. The outer heat exchanger 14 may cover at least a part 6' of the side wall 6. Said part 6' may extend from the bottom wall 10 in the longitudinal direction 12. The outer heat exchanger 14 may further substantially cover the bottom wall 10.

The batch reactor 2 may further comprise an inner heat exchanger 16. Said inner heat exchanger 16 is provided in the reaction space 8. The inner heat exchanger may be surrounded by the outer heat exchanger. When herein the term 'surrounds' or 'surrounded' is used, it may refer to surrounding along a complete circle or other line closed in itself, or along an arc, e.g. half of a circle or another arc. The inner heat exchanger 16 extends in the longitudinal direction 12. The inner heat exchanger 16 is arranged for exchanging heat with the reaction space 8. In use, by means of the inner heat exchanger, heat may be exchanged with the reaction mixture in the reaction space 8. Thus, the polymerization reaction may be realised by the inner heat exchanger as well as by the outer heat exchanger.

The batch reaction 2 further comprises an agitator 18 for transporting the reaction mixture through the reaction space 8. A possible transportation path is schematically indicated by means of arrows 15.i (i=1-3). At least a part of the agitator 18 is surrounded by the internal heat exchanger 16. The agitator 18 may be arranged for transporting the reaction mixture through the inner heat exchanger 16 against the longitudinal direction 12 (indicated by arrows 15.1), and along the outer heat exchanger 14 in the longitudinal direction (indicated by arrows 15.2). Such transporting is supported, in use, by natural convection of the reaction mixture as a result of heating of the reaction mixture by the outer heat exchanger 14 along the side wall 6 and along the bottom wall 10. However, alternatively or additionally, the agitator 18 may be arranged for transporting the reaction mixture through the inner heat exchanger 16 in the longitudinal direction 12 and along the outer heat exchanger 14 against the longitudinal direction 12, i.e. vice versa. Hence, in a part 8'" of the reaction space between the internal heat exchanger and the outer heat exchanger, the reaction mixture may predominantly flow in a direction opposite to a flow direction through the inner heat exchanger. Thus, a circulating motion (indicated by arrows 15.1, 15.2, and 15.3) of the reaction mixture along both the inner heat exchanger and the outer heat exchanger can be realised. In order to enable such circulating motion during the whole polymerization reaction, the inner heat exchanger may be positioned in the reaction vessel 4 to remain submerged during the whole of the polymerization reaction.

It may be appreciated that the inner heat exchanger, the outer heat exchanger, and the agitator are mutually aligned, e.g. may be positioned to extend in substantially parallel directions. They may also be aligned with the side wall 6 of the reaction vessel. They may be aligned along the longitudinal direction. The side wall 6 may at least partly surround the outer heat exchanger or the outer heat exchanger may at least partly surround the reaction vessel. The outer exchanger and the reaction vessel may both surround at least part of the agitator. Thus, along an imaginary line from a center of the reaction vessel directed outwards perpendicular to the side wall 6, the agitator, the inner heat exchanger 16, the side wall 6, and the outer heat exchanger 14 may be provided, in that order.

During the polymerization of concentrated AH salt, relatively large amounts of water need to be removed in a relatively short time in order to grow molecular weight. For economical batch polymerization of polyamide 66 on a large scale it is desirable to have relatively high heat transfer rates through relatively large heat exchange surfaces, as well as efficient mixing, in order to obtain a homogeneous product. By means of the combination of the inner heat exchanger 16, the outer heat exchanger 14, the agitator 18 being, at least partly, surrounded by the internal heat exchanger, homogeneous mixing and heat supply over relatively large heat exchange surfaces towards the reaction mixture may be achieved. Thus, a homogeneous polymer may be produced. Such a polymer may have a consistent molecular weight. That is, a molecular weight distribution of the polymer may be relatively narrow.

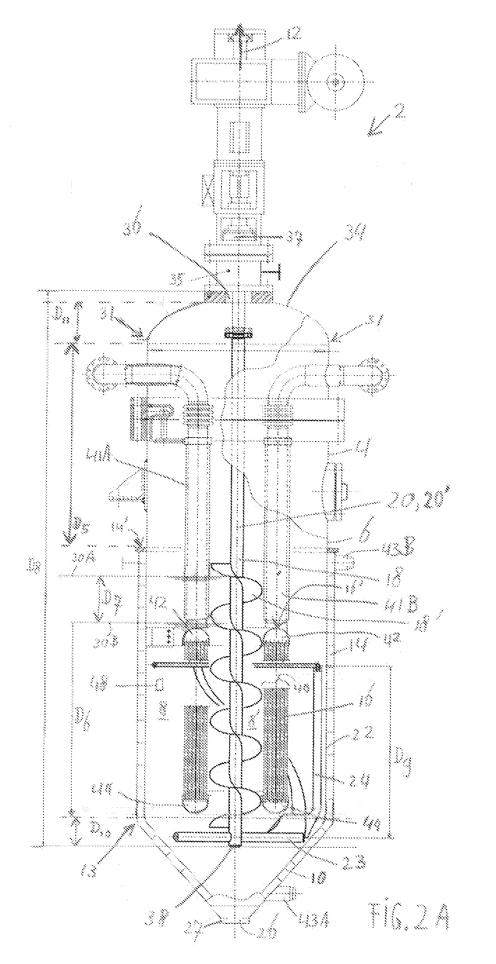

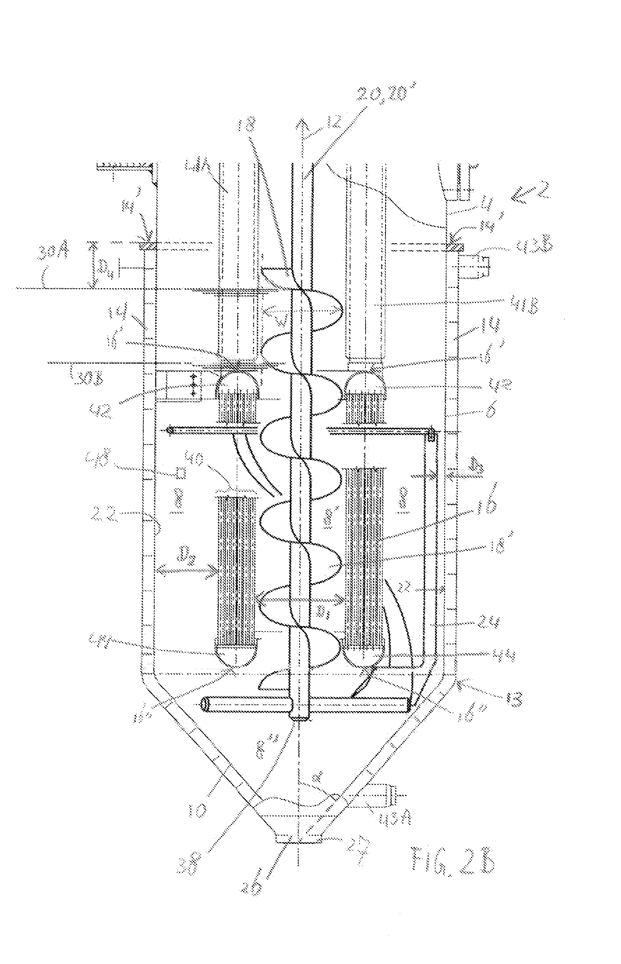

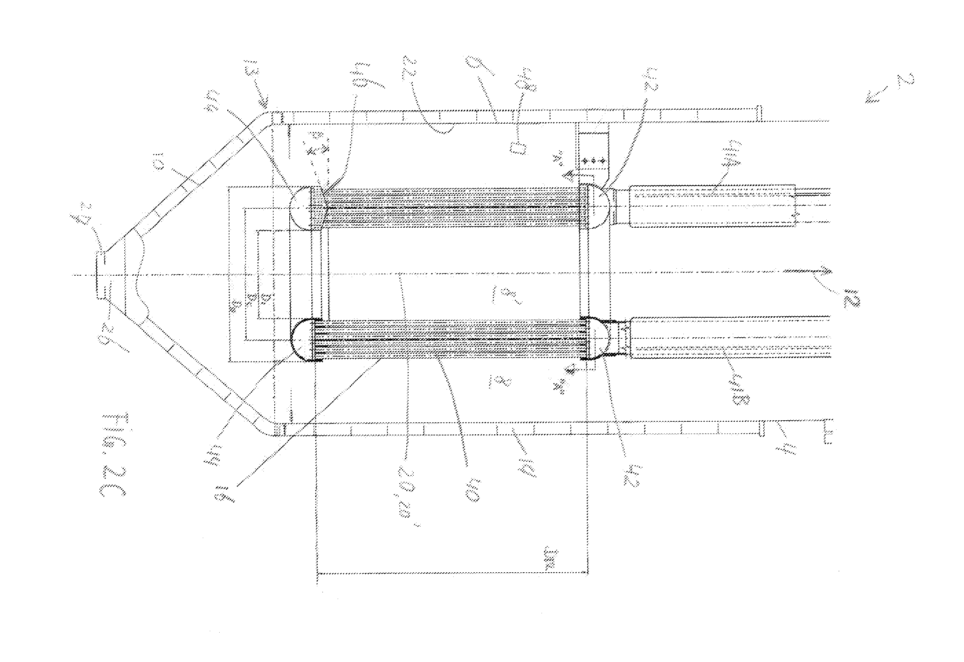

Figure 2A shows an exploded side view of batch reactor 2 in a second embodiment according to the invention. The batch reactor 2 in the second embodiment comprises the agitator 18, the reaction vessel 4, the outer heat exchanger 14, and the inner heat exchanger 16. Features of the reaction vessel 2 in the first embodiment, may be present in the reaction vessel 2 in the second embodiment as well. Figure 2B shows a lower part of the batch reactor 2 in the second embodiment. Figure 2C shows a lower part of the batch reactor 2 in the second embodiment, without showing the agitator 18.

In the second embodiment, the reaction vessel 4 may be substantially cylindrically shaped, i.e. may substantially have the form of a cylinder. A diameter of the cylinder may be in a range from 1.5 meter to 2.5 meter, e.g. approximately 2 meter. The reaction vessel 4 may have an axis of symmetry 20 that is directed in the longitudinal direction 12. The inner heat exchanger may be shaped as an annular ring (thus, a tubular heat exchanger may be provided). In that way, the inner heat exchanger encloses a substantially cylindrically-shaped part 8' of the reaction space 8. Said annular ring (or, in other words, a hollow cylinder) may have an axis of symmetry 20' that is directed in the longitudinal direction 12. A diameter D₁ of the substantially cylindrically-shaped part of the reaction space enclosed by the inner heat exchanger, divided by a radial distance D₂ between the side wall and the inner heat exchanger, may be in a range from 1.2 to 1.8. The ratio D₁/D₂ may for example be approximately 1.5.

At least part of the agitator 18 may be surrounded by the internal heat exchanger 16. The agitator 18 may comprise an Archimedes screw 18' that is at least partly surrounded by the internal heat exchanger that is shaped as an annular ring. The Archimedes screw 18' may be arranged for transporting the reaction mixture through the inner heat exchanger against the longitudinal direction 12, e.g. downwards. The Archimedes screw 18' may further be arranged for transporting the reaction mixture along the outer heat exchanger in the longitudinal direction, e.g. upwards. Thus, the reaction mixture may be transported repeatedly through the inner heat exchanger, i.e. through the substantially cylindrically-shaped part 8' of the reaction space 8, enclosed by the inner heat exchanger 16.

A width W of the Archimedes screw is at least 90%, preferably at least 95%, more preferably at least 97%, of the diameter D₁ of the substantially cylindrically-shaped part of the reaction space enclosed by the inner heat exchanger. Such values of the width W may promote efficient transporting of the reaction mixture by means of the Archimedes screw 18.

The agitator may be provided with means for wiping an inner surface 22 of the side wall 6. Such means may be comprise a ribbon 24. Such a ribbon 24 may be flexible. The ribbon 24 may curve upward along the side wall of the reaction vessel 4. The ribbon may be positioned close to the side wall in order to have a wiping function. During wiping, the ribbon may or may not be in contact with the side wall. Preferably, a wiping distance D₃ between the inner surface 22 of the side wall 6 and the ribbon 24 is in a range from 10 millimeter to 50 millimeter. Such a wiping distance D₃ may in general provide for a relatively good wiping. The means for wiping the inner surface may alternatively or additionally comprise a brush. The means, e.g. the ribbon 24 or the brush, may extend along the inner surface of the side wall 6. The means may be connected to the agitator 18 so as to move along the inner surface 22 of the side wall 6 by means of the agitator 18. Alternatively to or in addition to the ribbon and/or the brush, the means may comprise a doctor blade or another part that can agitate the reaction mixture especially in a part of the reaction space 8 that is adjacent to the inner surface 22 of the side wall 6. The ribbon and/or the brush may be supported by a support bar 23.

The bottom wall 10 may comprise a reaction mixture outlet 26 for discharging the reaction product, e.g the polyamide, out of the reaction space 8. The reaction mixture outlet 26 may be formed by a flange 27. The outer heat exchanger may substantially cover the bottom wall 10, except for a part of the bottom wall 10 that may be covered by the flange 27. Said reaction mixture outlet may be closed during the polymerization reaction, and may be opened during discharge of the reaction product, e.g. the polyamide, out of the reaction vessel 4. The bottom wall 10 may be sloped with respect to the longitudinal direction 12. Hence, the bottom wall 10 may have an angle with the longitudinal direction other than 90 degrees. Similarly, the bottom wall may be sloped with respect to the side wall 6. I.e., the bottom wall may have an angle with the side wall other than 90 degrees. Preferably, the bottom wall is completely, i.e. the whole bottom wall 10 is, sloped with respect to the longitudinal direction 12, as shown in figures 2A-C. The bottom wall 10 may have a frustoconical shape, as shown in figures 2A-C.

An angle α of the slope of the bottom wall 10 with respect to the longitudinal direction 12 may be in a range from 35 to 48 degrees. In particular, the angle α may be in a range from 38 to 46 degrees. More in particular, the angle α may be in a range from 39 to 44 degrees, for example approximately 41 degrees. If the angle α is too small, a corresponding increase of a part 8" of the reaction space 8 that is positioned under the internal heat exchanger, may be too large. Such may go at the expense of the homogeneity of the polymer. However, if the angle α is too large, flow of the polymer out of the reaction vessel 4 may be too slow. Hence, substantial amounts of rest material of polymer may stay in the reaction vessel 4 during formation of a next batch of polymer. It was found by the inventors that said ranges and values of the angle α provide for a good compromise between a size of the part 8" of the reaction space 8 that is positioned under the internal heat exchanger, and a flow velocity of the polymer out of the reaction vessel 4.

Thus, by means of the sloped bottom wall, an improved batch reactor may be obtained wherein the amount of rest material of a previous batch may be reduced. Such rest material may have a residence time that is longer than a standard cycle time of a batch in the reaction vessel, so that it can give rise to discoloured material, or even to black specks. Process conditions such as pressure and temperature may change from batch to batch. Therefore, preventing rest material may be even more desirable as compared to a situation where process conditions are the same for each batch. Decreasing an amount of the rest material may be realised by a design of the batch reactor wherein, in the reaction space, the number and size of 'dead zones' is decreased. Such dead zones may be characterised by local strongly decreased flow velocities during discharge of a polymer batch.

In the first and second embodiment, the inner heat exchanger has, in the longitudinal direction, a top end 16'. The outer heat exchanger 14 has, in the longitudinal direction, a top end 14'. In use, at the start of polymerization, a level 30A of the reaction mixture may be below the top end 14' of the outer heat exchanger 14. Thus, all of the reaction mixture may be heated approximately similarly. As a result, the homogeneity of the polymer may be improved. For example, the top end 14' of the outer heat exchanger 16 is at most 30 centimeter, preferably at most 20 centimeter, above the level of the reaction mixture. Thus, a distance D₄, as indicated in figure 2B, may be at most 30 centimeter, preferably at most 20 centimeter.

Preferably, in use at the end of polymerization, a level 30B of the reaction mixture is above the top end 16' of the inner heat exchanger 16 so that the inner heat exchanger is substantially completely submerged in the reaction mixture. As a result, circulating flow of the reaction mixture through the inner heat exchanger may continue during the whole of the polymerization reaction.

The reaction vessel 4 may have a top wall 34. The side wall 6 may be connected to the top wall 34. A boundary 31 between the side wall 6 and a top wall 34 may be defined at a position where, when following the side wall 6 in the longitudinal direction, the side wall 6 starts to incline with respect to the longitudinal direction 12. A vapour outlet 36 may be provided in the top wall 34. Water vapour generated by the heating by means of the inner- and outer heat exchanger, may be discharged through the vapour outlet 36 during the polymerization reaction.

The side wall 6' may extend, in the longitudinal direction 12 away from the bottom wall 10, from the top end 16' of the outer heat exchanger over a distance D₅. Said distance D₅ may at least be approximately 0.75 meter, preferably at least 1 meter, more preferably at least 1.25 meter. The distance D₅ is indicated in figure 2A. If the distance D₅ is too small, polymer parts that come free from the reaction mixture may be entrained and may reach the vapour outlet 36 that may be position near the top wall 34 of the reaction vessel 4., and may eventually plug the vapour outlet 36. It was found that a distance D₅ of at least 0.75 meter may significantly decrease a probability of such plugging.

Further dimensions of an example of a batch reactor are illustrated in figures 2A-C. A distance D₆, between the level 30B at the end of polymerization (and before discharge through the outlet 26) and the bottom wall 10, may be in a range from 1.7 meter to 2.6 meter, for example approximately 2.15 meter. A distance D₇, between the level 30A at the start of polymerization and the level 30B at the end of polymerization(and before discharge through the outlet 26), may be in use be in a range from 0.4 meter to 1 meter, for example approximately 0.6 meter. A length D₈ of the agitator 18 may be in a range from 4 meter to 6 meter, for example approximately 5.3 meter. The agitator is preferably mounted in or adjacent to the top wall 34 of the reaction vessel 4. If the length of the agitator is too long, it may be difficult to prevent unwanted mechanical contact between the agitator, e.g. the Archimedes screw of the agitator, and the inner heat exchanger 16. For a relatively long agitator, lateral displacements, i.e. displacements in direction transverse to the longitudinal direction 12, of the agitator adjacent to the inner heat exchanger may be relatively large, enlarging a risk for such mechanical contact. If the length of the agitator is too short, the vapour outlet may in use be too close to the reaction mixture. As a result, polymer parts that may come free from the reaction mixture may reach the vapour outlet 36, and may eventually plug the vapour outlet 36. This may lead to a dangerous situation, as the vapour cannot be released anymore through the vapour outlet 36. A length D₉ of the means, e.g. the ribbon 24, for wiping the inner surface 22 of the side wall 6 may be, when measured in the longitudinal direction, in a range from 1.5 meter to 2.5 meter, for example approximately 2 meter. A distance D₁₀ between a lower end 38 of the agitator 18, and the boundary 13 between the bottom wall 10 and the side wall 6, may be, when measured in the longitudinal direction 12, in a range from 0.2 to 0.4 meter, for example approximately 0.3 meter. A length D₁₁ of the top wall 34, measured in the longitudinal direction, may be in a range from 0.3 meter to 0.7 meter, for example approximately 0.5 meter. The diameter D₁ of the substantially cylindrically-shaped part 8' of the reaction space 8 enclosed by the inner heat exchanger 16 may be in a range from 0.4 to 0.8 m, for example approximately 0.6 meter. A distance D_{c} between central positions in the annular ring of the inner heat exchanger may be in a range from 0.7 meter to 1.1 meter, for example approximately 0.9 meter. An outer diameter of the inner heat exchanger Do may be in a range from 1 meter to 1.4 meter, for example approximately 1.2 meter. It may be clear that it holds that Dₒ>D_{c}>D₁. The batch reactor 2 may further be provided with a steam trap 35. The batch reactor 2 may further be provided with driving means 37 for driving the agitator 18.

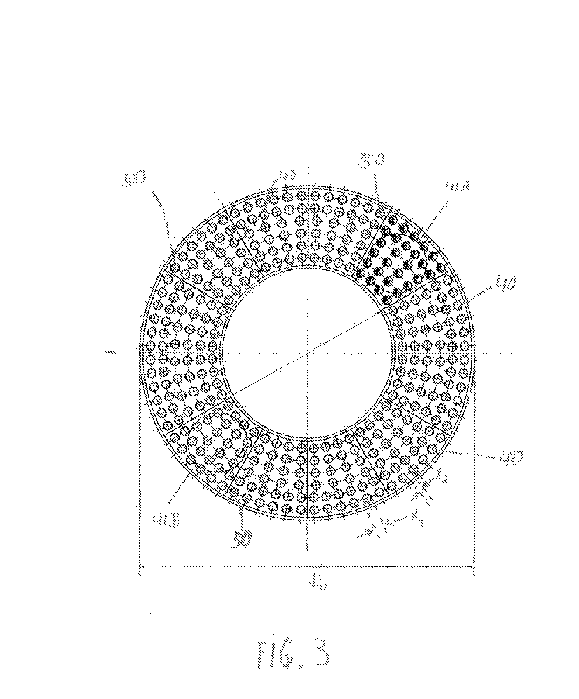

Figure 3 shows the inner heat exchanger 16 in a cross-section "A" indicated in figure 2C. In an embodiment, the inner heat exchanger comprises a plurality of heat exchange tubes 40. The heat exchange tubes 40 may be arranged in an annular ring, thus forming approximately a hollow cylinder. It may be clear that e.g. the presence of the heat exchange tubes may give rise to small deviations from a pure hollow cylinder. Similarly, e.g. the heat exchange tubes may cause the substantially cylindrically-shaped part 8' of the reaction space 8 enclosed by the inner heat exchanger 16 to deviate from a pure cylinder-shape. Here, the term 'substantially' may be used to indicate e.g. such deviations caused by the heat exchange tubes. The heat exchange tubes 40 may extend in the longitudinal direction 12. Thus, the heat exchange tubes 40 may be directed in parallel with the side wall 6. A length D₁₂ of the heat exchange tubes may be in a range from 1.5 meter to 2 meter, for example approximately 1.8 meter.

The inner heat exchanger may thus be formed as a vertical tubular heat exchanger. It may thus comprise a plurality of heat exchange tubes 40 arranged in a cylindrical configuration around a cylindrical space 8'. A top end 16' of said tubular heat exchanger may be positioned such that it is completely submerged in the reaction mixture, e.g. a mixture of polymer and possibly AH-salt solution, at or near the end of the polymerization reaction and before discharge of the polymer out of the reaction vessel 4. The agitator 18 may be positioned in the cylindrical space 8' in the tubular heat exchanger 16. Said agitator 18 may be designed for realising a downward pumping movement through the inner heat exchanger.

The inner heat exchanger may be provided with at least one partition plate 50. The partition plates 50 may extend in the longitudinal direction 12. The partition plates 50 may further extend in the radial direction of the annular ring formed by the inner heat exchanger. The partition plates 50 may be arranged to guide liquid heat transfer medium.

In use, the heat exchange tubes 40 may be filled with an inner heat transfer medium, such as oil. The inner heat exchanger and/or the outer heat exchanger are preferably designed to be used with a liquid heat transfer medium. Alternatively, the inner heat exchanger and/or the outer heat exchanger may be designed to be used with a vapour condensing heat transfer medium (for example comprising diphenyl). Such a vapour condensing heat transfer medium is, in use, partly a liquid (after heat exchange) and partly a gas (before heat exchange). When a vapour condensing heat transfer medium is used, the partition plates 50 may be omitted.

The inner heat transfer medium may be heated before it enters the heat exchange pipes 40. By pumping the inner heat transfer medium through the heat exchange pipes 40, the reaction mixture may be heated. The heat exchange pipes 40 may provide for an inner heat exchanger 16 having a relatively large heat exchange surface, which enables efficient heat exchange with the reaction mixture. Thus, the inner heat transfer medium may be flowing through the heat exchange tubes 40, while the reaction mixture, i.e. the polymerizing reaction mixture, is flowing around the heat exchange tubes 40. An inner supply tube 41A and an inner discharge tube 41B may be provided. Heated inner heat transfer medium may be supplied to the inner heat exchanger 16 through the inner supply tube 41A. Inner heat transfer medium may be discharged from the inner heat exchanger through the inner discharge tube 41B. The inner supply tube 41A and the inner discharge tube 41B may be in fluid communication with one another through the heat exchange pipes 40 and a first collecting tube 44. Further, an outer supply tube 43A and an outer discharge tube 43B may be provided. Heated outer heat transfer medium may be supplied to the outer heat exchanger 14 through the outer supply tube 43A. Outer heat transfer medium may be discharged from the outer heat exchanger 14 through the outer discharge tube 43B. The outer supply tube 43A and the outer discharge tube 43B may be in fluid communication with one another through the outer heat exchanger 14. Preferably, discharged heat transfer medium is reused. After heating, the heat transfer medium may be supplied to the inner heat exchanger via the inner supply tube 41A or to the outer heat exchanger via the outer supply tube 43A.

At the top end 16' of the inner heat exchanger 16, which is directed away from the bottom wall 10, a second collecting tube 42 may be provided. The second collecting tube 42 may be in fluid communication with the heat exchange tubes 40. At a lower end 16" of the inner heat exchanger, which lower end is directed towards the bottom wall 10, the first collecting tube 44 may be provided. Said first collecting tube 44 may be in fluid communication with the heat exchange tubes 40. At a side directed away from the bottom wall 10, i.e. an, in use, upper side, an outer surface 46 of the first collecting tube 44 may be sloped with respect to a direction that is perpendicular to the longitudinal direction 12. Thus, in use, the outer surface 46 may be sloped with respect to the horizontal direction. An angle β of the slope of the surface 46 with respect to the direction that is perpendicular to the longitudinal direction, e.g. the horizontal direction, may be in a range from 15 to 30 degrees. The surface 46 and the angle β are indicated in figure 2C.

Preferably, outer diameters X₁, a number, and mutual distances X₂ of the heat exchange tubes 40 are arranged for enabling a majority, e.g. more than 50%, 75%, or 95%, of the polymer that is present in between the heat exchange tubes at the end of the polymerization reaction to flow, as a result of gravity and/or pressure in the reaction vessel 4, downwards in between the heat exchange tubes 40 and away from the heat exchange tubes towards the reaction mixture outlet 26. Such outflow of the majority of the polymer may be realised during a discharge time in between batches that may be smaller than 40 minutes, e.g. approximately 25 minutes, during which the outlet 26 may be opened. Such arrangement may be especially beneficial during discharge of the polymer through the reaction mixture outlet when the polymerization reaction has substantially ended. By means of said downward flow, an amount of rest material in the reaction vessel may be reduced. Thus, a self-draining heat exchanger may be obtained. Self draining is defined as leaving substantially no residual material in the heat exchanger after discharge of the polymer out of the reaction vessel. More in general, preferably less than 1% of the polymer present in the vessel at the end of the polymerisation reaction, more preferably less than 0.5% of the polymer present in the vessel at the end of the polymerisation reaction, is left after discharging the polymer out of the reaction vessel and after draining the inner heat exchanger during the discharge time. The skilled person will be able to adjust the dimensions of the self-draining heat exchanger depending on the viscosity of the material to be drained. During discharge of the polymer out of the reaction vessel and draining of the polymer out of the inner heat exchanger, a dynamic viscosity of the polymer, e.g. polyamide 66, may e.g. be in a range from 1 Pa·s to 10² Pa·s. Said viscosity may be measured in a cone-plate rheometer at a shear rate of e.g. 10² s⁻¹ at a temperature of 300 degrees Celsius.

In an embodiment, at least a part, preferably at least 80%, of the outer diameters X₁, and/or at least a part, preferably at least 80%, of the mutual distances X₂, is in a range from 1 centimeter to 5 centimeter.

The outer heat exchanger may comprise the outer heat exchange medium, e.g. an outer heat exchange liquid, and the inner heat exchanger comprises the inner heat exchange medium, e.g. the inner heat exchange liquid. The batch reactor 2 may comprise a temperature sensor 48 for measuring the temperature of the reaction mixture during the polymerization reaction. The batch reactor 2 may further comprises a heater for heating the outer heat exchange medium and/or the inner heat exchange medium. The batch reactor may further comprises a controller that is arranged for controlling, based on the temperature of the reaction mixture measured by means of the temperature sensor, said heating by the heater.

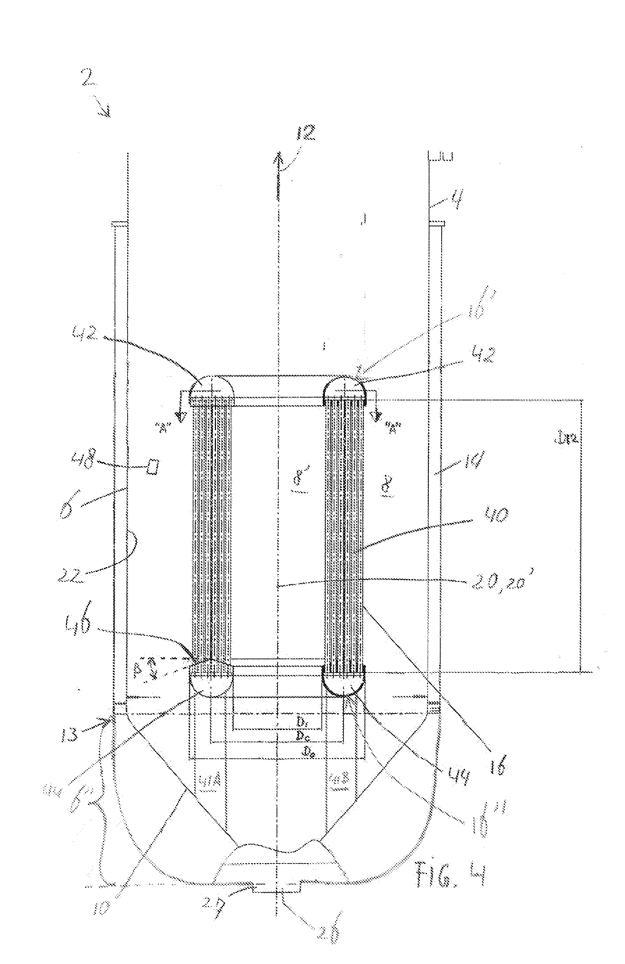

Figure 4 schematically shows a batch reactor 2 in a third embodiment according to the invention. In the third embodiment, the inner supply tube 41A and the inner discharge tube 41B may be provided, in use, below the inner heat exchanger 16. Thus, the heat exchange medium may be provided to the inner heat exchanger at the first collecting tube 44. Said first collecting tube 44 may be located at the lower end 16" of the inner heat exchanger 16. Such arrangement may be contrary to the batch reactor 2 in the second embodiment, wherein the heat exchange medium may be provided to the inner heat exchanger at the second collecting tube 42. Said second collecting tube 42 may be located at the top end 16' of the inner heat exchanger 16. The supported by a bar 23 for the ribbon and/or the brush (not drawn in figure 4) may be provided at a top part of the ribbon and/or the brush. More in general, the inner supply tube 41A and the inner discharge tube 41B may provide mechanical support for the inner heat exchanger 16. Such support may be realised by providing a mechanical connection between the inner supply tube 41A and/or the inner discharge tube 41B on the one hand, and the bottom wall, the side wall, and/or the top wall of the reaction vessel 4 on the other hand.

In the third embodiment, the heat transfer medium preferably is a vapour condensing heat transfer medium (e.g. comprising, or substantially consisting of, diphenyl). Such a vapour condensing heat transfer medium combines well with embodiment, such a the third embodiment, wherein the heat transfer medium enters the inner heat exchanger at the first collecting tube 44 (i.e. at or near the lower end of the inner heat exchanger). A venting tube (not drawn but known as such to the skilled person) may be provided in connection with the second collecting tube 42. Such a venting tube may be used for providing heat exchange medium during start-up of the inner heat exchanger 16. A part 6" of the outer heat exchanger may substantially cover the bottom wall 10. Said part 6" of the outer heat exchanger 14 that substantially covers the bottom wall 10 may be curved, e.g. substantially spherically shaped. Further features of the batch reactor 2 in the third embodiment may be similar to the batch reactor 2 in the first or second embodiment.

The batch reactor 2 as described herein before, or another batch reactor, may be used in an embodiment of a method according to the invention (said embodiment further being referred to as the first method). The first method may comprise providing the AH-salt. The AH-salt may be available in the form of a solid or as an aqueous solution of typically 48-52% or 60-62%. Before being entered into the reaction vessel, water may be removed from the aqueous solution. In a typical embodiment the AH salt solution is first concentrated in an evaporation unit to a concentration of about 75-85% before transferring it to the reaction vessel 4. In the batch reactor, the polymerization reaction may takes place, thus building molecular weight until a desired molecular weight is achieved. The first method may thus comprise carrying out a polymerization reaction for forming polyamide 66 from the aqueous solution of AH-salt by means of the batch reactor 2. The process of polymerizing AH salt in order to product PA66 (polyamide 66) is known to the skilled person, and does not require elucidation here.

The first method may comprise providing the reaction vessel 4 having the side wall 6 that encloses the reaction space 8 of the reaction vessel 4. The first method may comprise providing the reaction vessel 4 with the longitudinal direction directed upwards, e.g. vertical. Afterwards, the AH-salt solution may be brought into the reaction vessel. Then, the agitator may be brought into motion for transporting the reaction mixture through the reaction space. By means of an Archimedes screw of the agitator, a downward pumping motion may be realised in the part 8' of the reaction space 8 that is enclosed by the inner heat exchanger 16. Approximately at the same time, the inner heat exchange medium and the outer heat exchange medium may be heated and pumped through respectively the inner heat exchanger and the outer heat exchanger. As a result, in the first method, heat may be exchanged with the reaction space 8 by means of the inner- and outer heat exchangers. This enables the polymerization reaction.

As a result of transporting the reaction mixture by means of the agitator, the reaction mixture is transported along, e.g. through, the inner heat exchanger and along the outer heat exchanger. The reaction mixture may be transported in the reaction space along the inner heat exchanger against the longitudinal direction and along the outer heat exchanger in the longitudinal direction, and/or vice versa. Thus, heat can be exchanged with the reaction mixture and the inner- and outer heat exchanger. The reaction mixture may be heated and the solvent, e.g. the water, may evaporate. As a result, the polymerization reaction may occur. The evaporated water may be drained through the vapour outlet 36.

It may thus be clear that, during the polymerization reaction in the first method, the reaction mixture, which comprises the polyamide and/or the solution, is held in the reaction space 8. After the polymerization reaction has ended, the polymer that has formed, i.e. a polymer batch, is discharged from the reaction vessel 4. As a result of the sloped bottom wall 10 and the self-draining inner heat exchanger, the amount of polymer that remains in the reaction vessel may be reduced. Thus, polymer, e.g. polyamide 66, can be produced with a relatively transparent and/or clear colour and a relatively low level of contaminants such as gels and/or black specks. Furthermore, as a result of the homogeneous mixing by means of the agitator and the homogeneous heating by means of the inner and outer heat exchanger, a relatively homogeneous batch of polymer may be obtained, having a consistent molecular weight.

The invention is not limited to any embodiment herein described and, within the purview of the skilled person, modifications are possible which may be considered within the scope of the appended claims. Equally all kinematic inversions are considered inherently disclosed and to be within the scope of the present invention. The indefinite article "a" or "an" does not exclude a plurality. Features which are not specifically or explicitly described or claimed may be additionally included in the structure according to the present invention without deviating from its scope.

## Claims

1. Batch reactor for carrying out a polymerization reaction for forming a polymer from a liquid monomer composition, the batch reactor comprising:
- a reaction vessel that is longitudinally shaped and has a side wall that encloses a reaction space of the reaction vessel, the reaction vessel being arranged for holding in the reaction space a reaction mixture that comprises the polymer and/or the liquid monomer composition, the reaction vessel further having a bottom wall that further encloses the reaction space and is connected to the side wall, wherein the side wall extends away from the bottom wall in a longitudinal direction of the reaction vessel that is, in use, directed upwards;
- an outer heat exchanger for exchanging heat with the reaction space for enabling the polymerization reaction, the outer heat exchanger covering at least a part of the side wall, said part extending from the bottom wall in the longitudinal direction;
- an inner heat exchanger that is provided in the reaction space and that extends in the longitudinal direction, wherein the inner heat exchanger is, at least partly, surrounded by the outer heat exchanger;
- an agitator for transporting the reaction mixture through the reaction space, wherein at least part of the agitator is surrounded by the internal heat exchanger, wherein the agitator is arranged for transporting the reaction mixture through the inner heat exchanger against the longitudinal direction and along the outer heat exchanger in the longitudinal direction, and/or vice versa, for exchanging heat between the reaction mixture and the inner- and outer heat exchanger.

2. Batch reactor according to claim 1, wherein the reaction vessel is substantially cylindrically shaped and has an axis of symmetry that is directed in the longitudinal direction.

3. Batch reactor according to claim 1, wherein the inner heat exchanger is shaped as an annular ring having an axis of symmetry that is directed in the longitudinal direction, the inner heat exchanger thus enclosing a substantially cylindrically-shaped part of the reaction space.

4. Batch reactor according to claim 3, wherein the reaction vessel is substantially cylindrically shaped and has an axis of symmetry that is directed in the longitudinal direction, and wherein a diameter of the cylindrically-shaped part of the reaction space enclosed by the inner heat exchanger divided by a radial distance between the side wall and the inner heat exchanger is in a range from 1.2 to 1.8, for example approximately 1.5.

5. Batch reactor according to claim 1, wherein the agitator comprises an Archimedes screw.

6. Batch reactor according to claim 5, wherein the inner heat exchanger is shaped as an annular ring having an axis of symmetry that is directed along the longitudinal direction, the inner heat exchanger thus enclosing a substantially cylindrically-shaped part of the reaction space, wherein a width of the Archimedes screw is at least 90%, preferably at least 95%, more preferably at least 97%, of a diameter of the substantially cylindrically-shaped part of the reaction space enclosed by the inner heat exchanger.

7. Batch reactor according to claim 1, wherein the outer heat exchanger further substantially covers at least part of the bottom wall.

8. Batch reactor according to claim 1, wherein the agitator is provided with means, which preferably comprise a ribbon, for wiping an inner surface of the side wall.

9. Batch reactor according to claim 1, wherein the bottom wall comprises a reaction mixture outlet for discharging the reaction mixture, e.g. comprising the polyamide, out of the reaction space, the bottom wall being, at least partly and preferably completely, sloped with respect to the longitudinal direction.

10. Batch reactor according to claim 9, wherein the bottom wall has a frustoconical shape.

11. Batch reactor according to claim 9, wherein an angle of the slope of the bottom wall with respect to the longitudinal direction is in a range from 35 to 48 degrees, preferably in a range from 38 to 46 degrees, more preferably in a range from 39 to 44 degrees, for example approximately 41 degrees.

12. Batch reactor according to claim 1, wherein the inner heat exchanger comprises a plurality of heat exchange tubes that extend in the longitudinal direction.

13. Batch reactor according to claim 12, wherein the bottom wall comprises a reaction mixture outlet for discharging the reaction mixture, e.g. comprising the polyamide, out of the reaction space, wherein outer diameters, a number, and mutual distances of the heat exchange tubes are arranged for enabling a majority of the polymer that is present in between the heat exchange tubes at the end of the polymerization reaction to flow, as a result of gravity and/or pressure in the reaction vessel, downwards in between the heat exchange tubes and away from the heat exchange tubes towards the reaction mixture outlet, during a discharge time in between batches being at most 40 minutes.

14. Batch reactor according to claim 12, comprising, at an end of the heat exchange tubes, which end is directed towards the bottom wall, a collecting tube that is in fluid communication with the heat exchange tubes and has, at a side directed away from the bottom wall, an outer surface, said outer surface being sloped with respect to a direction that is perpendicular to the longitudinal direction.

15. Batch reactor according to claim 1, wherein the inner heat exchanger has, in the longitudinal direction, a top end, and wherein the outer heat exchanger has, in the longitudinal direction, a top end, wherein, in use at the start of polymerization, a level of the reaction mixture is below the top end of the outer heat exchanger and/or wherein, in use at the end of polymerization, the level of the reaction mixture is above the top end of the inner heat exchanger so that the inner heat exchanger is substantially completely submerged in the reaction mixture.

16. Batch reactor according to claim 15, wherein, the top end of the outer heat exchanger is at most 30 centimeter, preferably at most 20 centimeter, above the level of the reaction mixture.

17. Batch reactor according to claim 15, wherein the side wall extends, in the longitudinal direction away from the bottom wall, from the top end of the outer heat exchanger over a distance of at least approximately 0.75 meter, preferably at least 1 meter, more preferably at least 1.25 meter.

18. Batch reactor according to claim 1, wherein the outer heat exchanger comprises an outer heat exchange medium and the inner heat exchanger comprises an inner heat exchange medium, wherein the batch reactor comprises a temperature sensor for measuring a temperature of the reaction mixture and further comprises a heater for heating the outer heat exchange medium and/or the inner heat exchange medium, wherein the batch reactor further comprises a controller that is arranged for controlling, based on the temperature of the reaction mixture measured by means of the temperature sensor, said heating by the heater.

19. Method of carrying out a polymerization reaction for forming a polyamide from a liquid monomer composition by means of a batch reactor, the method comprising:
- providing a reaction vessel that is longitudinally shaped and has a side wall that encloses a reaction space of the reaction vessel, the reaction vessel further having a bottom wall that further limits the reaction space and is connected to the side wall, wherein the side wall extends from the bottom wall in a longitudinal direction of the reaction vessel that is, in use, directed upwards;
- holding in the reaction space a reaction mixture that comprises the polymer and/or the liquid monomer composition;
- exchanging heat with the reaction space by means of an outer heat exchanger that covers at least a part of the side wall that extends from the bottom wall in the longitudinal direction, thus enabling the polymerization reaction;
- exchanging heat with the reaction space by means of an inner heat exchanger that is provided in the reaction space and that extends in the longitudinal direction, the inner heat exchanger being, at least partly, surrounded by the outer heat exchanger;
- transporting the reaction mixture through the reaction space through the inner heat exchanger against the longitudinal direction and along the outer heat exchanger in the longitudinal direction, and/or vice versa, by means of an agitator, wherein at least part of the agitator is surrounded by the internal heat exchanger, thus exchanging heat between the reaction mixture and the inner- and outer heat exchanger.

20. Method according to claim 19, carried out by means of a batch reactor according to claim 1.
